# EUROPEAN PATENT APPLICATION

(11) **EP 4 823 199 A1**
(43) Date of publication of application: **14.10.2026**
(21) Application number: 24910987.7
(22) Date of filing: 20.12.2024
(51) Int. Cl.: H04W 72/044

(54) **COMMUNICATION METHOD AND APPARATUS**

(30) Priority: 29.12.2023 CN 202311865196
(71) Applicant: Huawei Technologies Co., Ltd., Shenzhen, Guangdong 518129 (CN)
(72) Inventor: WANG, Xiaona, Shenzhen, Guangdong 518129 (CN); YAN, Mao, Shenzhen, Guangdong 518129 (CN)
(74) Representative: Körber, Martin Hans
(86) International application number: PCT/CN2024/141171
(87) International publication number: WO 2025/140059

(57) **Abstract**

Embodiments of this application relate to the field of communication technologies, and provide a communication method and apparatus, to increase a system capacity. In the method, a network device may preconfigure, for a terminal device, a mapping relationship between a pilot sequence and a transmission beam. The terminal device may determine, based on the mapping relationship and a first pilot sequence corresponding to a received pilot signal, a first transmission beam, corresponding to the first pilot sequence, of a downlink channel, so that the terminal device can subsequently determine a corresponding reception beam based on the first transmission beam. This allows for faster reception of the downlink channel by using the newly matched reception beam, improving a system capacity and user experience.

## Description

This application claims priority to Chinese Patent Application No. 202311865196.6, filed with the China National Intellectual Property Administration on December 29, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Currently, different beams may transmit data for a same user at different moments. A network device may indicate, to a terminal device by using a transmission configuration indicator (transmission configuration indicator, TCI) of downlink control information (downlink control information, DCI), information about a transmission beam of a physical downlink shared channel (physical downlink shared channel, PDSCH) scheduled by a current physical downlink control channel (physical downlink control channel, PDCCH).

However, a blind detection of the DCI by the terminal device requires specific duration (timeDuration). In this case, when the terminal device receives PDSCH data on first several symbols in a current slot, a used reception beam is not necessarily the most appropriate one, affecting a system capacity.

### SUMMARY

Embodiments of this application provide a communication method and apparatus, to increase a system capacity.

To achieve the foregoing objectives, the following technical solutions are used in embodiments of this application.

According to a first aspect, a communication method is provided. The method may be performed by a terminal device, may be performed by a module (for example, a processor, a chip, or a chip system) used in the terminal device, or may be implemented by a logical node, a logical module, or software that can implement all or some functions of the terminal device. For ease of description, the following uses an example in which the method is performed by the terminal device for description. The method includes: receiving configuration information from a network device, receiving a pilot signal from the network device, and determining a first transmission beam of a downlink channel based on the configuration information and a first pilot sequence. The configuration information indicates a mapping relationship between a pilot sequence and a transmission beam, the pilot signal corresponds to the first pilot sequence, and the pilot sequence includes the first pilot sequence.

It can be learned from the method according to the first aspect that the terminal device may receive the mapping relationship preconfigured by the network device between the pilot sequence and the transmission beam, and determine, based on the mapping relationship and the first pilot sequence corresponding to the received pilot signal, the first transmission beam, corresponding to the first pilot sequence, of the downlink channel, so that the terminal device can subsequently determine a corresponding reception beam (for example, the following first reception beam) based on the first transmission beam. This allows for faster reception of the downlink channel by using the newly matched reception beam, improving a system capacity and user experience.

In a possible design scheme, the mapping relationship includes a mapping relationship between the pilot sequence and a transmission configuration indicator TCI or a mapping relationship between the pilot sequence and a pilot resource, so that the terminal device can subsequently quickly determine the first transmission beam of the downlink channel based on the TCI or the pilot resource corresponding to the pilot sequence.

In a possible design scheme, the pilot sequence is represented by different scrambling identifiers, or is represented by different parameter values of a sequence expression, to satisfy requirements of different scenarios. This is not limited.

In a possible design scheme, the pilot resource is a pilot resource configured by the network device for the terminal device, or a pilot resource corresponding to a pilot resource indicator reported by the terminal device.

It may be understood that: If the pilot resource is the pilot resource configured by the network device for the terminal device, the pilot resource may be a pilot resource in a pilot resource set configured by the network device for the terminal device, and mapping relationships between a plurality of groups of pilot sequences and pilot resources may be simultaneously configured. Alternatively, if the pilot resource is the pilot resource corresponding to the pilot resource indicator reported by the terminal device, the pilot resource may be pilot resources, of a specific quantity, selected by the terminal device, and the network device only needs to configure a corresponding pilot sequence for the specific quantity of pilot resources. In this way, a quantity of pilot sequences can be reduced, thereby reducing complexity of subsequent pilot sequence correlation detection performed by the terminal device, and reducing overheads.

In a possible design scheme, before determining the transmission beam of the downlink channel based on the configuration information and the first pilot sequence, the method according to the first aspect further includes: determining the first pilot sequence by performing a pilot sequence correlation detection on the pilot signal. The first pilot sequence may be a pilot sequence with a largest auto-correlation peak among a plurality of network-configured pilot sequences after sequence correlation is performed on the pilot sequence of the pilot signal. In this way, the terminal device may accurately determine the first pilot sequence from the plurality of configured pilot sequences, to subsequently determine the first transmission beam.

In a possible design scheme, determining the first transmission beam of the downlink channel based on the configuration information and the first pilot sequence includes: determining the first transmission beam of the downlink channel based on the configuration information and the first pilot sequence before downlink control information DCI is demodulated. In other words, before completing DCI decoding or demodulation, the terminal device may determine the first transmission beam based on the configuration information and the first pilot sequence. This allows for faster reception of the downlink channel by using the matched reception beam, improving user performance and user experience.

In a possible design scheme, the method according to the first aspect further includes: determining a first reception beam of the downlink channel based on the first transmission beam, and receiving a downlink data channel or a downlink control channel by using the first reception beam. In other words, the terminal device may determine the corresponding first reception beam based on the pre-determined first transmission beam, so that the terminal device can receive the subsequent downlink data channel or the downlink control channel by using the newly matched first reception beam, thereby improving communication efficiency and accuracy.

Optionally, receiving the downlink data channel or the downlink control channel by using the first reception beam includes: receiving the downlink data channel or the downlink control channel, by using the first reception beam, on a symbol after an interval greater than or equal to X symbols from the last symbol carrying the pilot signal, where X is an integer greater than or equal to 0. Optionally, the X symbols are time required for performing the pilot sequence correlation detection and/or beam switching.

It may be understood that, if the time required for the terminal device to perform the pilot sequence correlation detection and/or beam switching is very short, it may be considered that X is almost equal to 0. In this case, zero-delay beam switching between a PDCCH and a PDSCH can be implemented. In other words, the terminal device may receive, by using the newly matched first reception beam, the downlink data channel or the downlink control channel on a symbol adjacent to the last symbol carrying the pilot signal. If the terminal device needs specific time to perform the pilot sequence correlation detection and/or beam switching, it may be considered that X is greater than 0. In this case, the terminal device may receive, by using the first reception beam, the downlink data channel or the downlink control channel on the symbol after the interval greater than or equal to the X symbols from the last symbol carrying the pilot signal. It may be understood that the X symbols are shorter than time required by the terminal device to blindly detect the DCI, to reduce time during which the terminal device receives PDSCH data without using a most appropriate reception beam, thereby improving a system capacity and user experience.

In a possible design scheme, the pilot resource includes at least one of the following: a channel state information-reference signal CSI-RS resource, a synchronization information block SSB resource, a tracking reference signal TRS resource, a phase noise tracking reference signal PT-RS resource, a demodulation reference signal DMRS resource, or a sounding reference signal SRS resource. In other words, the existing pilot resource is reused to reduce implementation difficulty, or a new pilot resource may be used to improve implementation flexibility. This is not limited.

In a possible design scheme, the configuration information is carried in at least one of the following: RRC signaling, media access control-control element MAC-CE signaling, or DCI, that is, carried in an existing information element to reduce implementation difficulty, or carried in a new information element to improve implementation flexibility. This is not limited.

According to a second aspect, a communication method is provided. The method may be performed by a network device, may be performed by a module (for example, a processor, a chip, or a chip system) used in the network device, or may be implemented by a logical node, a logical module, or software that can implement all or some functions of the network device. For ease of description, the following uses an example in which the method is performed by the network device for description. The method includes: The network device send configuration information to a terminal device, and sending a pilot signal to the terminal device. The configuration information indicates a mapping relationship between a pilot sequence and a transmission beam, the pilot signal corresponds to a first pilot sequence, and the pilot sequence includes the first pilot sequence.

In a possible design scheme, the mapping relationship includes a mapping relationship between the pilot sequence and a transmission configuration indicator TCI or a mapping relationship between the pilot sequence and a pilot resource.

In a possible design scheme, the pilot resource is a pilot resource configured by the network device for the terminal device, or a pilot resource corresponding to a pilot resource indicator reported by the terminal device.

In a possible design scheme, the method according to the second aspect further includes: The network device sends a downlink data channel or a downlink control channel to the terminal device by using a first transmission beam of a downlink channel. The transmission beam includes the first transmission beam. In other words, the network device sends the downlink data channel or the downlink control channel by using the new first transmission beam, and the terminal device may use the first reception beam corresponding to the first transmission beam to receive the downlink data channel or the downlink control channel, to implement communication between the network device and the terminal device.

In a possible design scheme, the pilot resource includes at least one of the following: a channel state information-reference signal CSI-RS resource, a synchronization information block SSB resource, a tracking reference signal TRS resource, a phase noise tracking reference signal PT-RS resource, a demodulation reference signal DMRS resource, or a sounding reference signal SRS resource.

In a possible design scheme, the configuration information is carried in at least one of the following: RRC signaling, media access control-control element MAC-CE signaling, or DCI.

In addition, for other technical effects of the method according to the second aspect, refer to the technical effects of the method according to the first aspect. Details are not described herein again.

According to a third aspect, a communication apparatus is provided. The apparatus includes modules configured to perform the method according to the first aspect, for example, a transceiver module and a processing module.

The transceiver module is configured to: receive configuration information from a network device, and receive a pilot signal from the network device. The processing module is configured to determine a first transmission beam of a downlink channel based on the configuration information and a first pilot sequence. The configuration information indicates a mapping relationship between a pilot sequence and a transmission beam, the pilot signal corresponds to the first pilot sequence, and the pilot sequence includes the first pilot sequence.

In a possible design scheme, the mapping relationship includes a mapping relationship between the pilot sequence and a transmission configuration indicator TCI or a mapping relationship between the pilot sequence and a pilot resource.

In a possible design scheme, the pilot sequence is represented by different scrambling identifiers, or is represented by different parameter values of a sequence expression.

In a possible design scheme, the pilot resource is a pilot resource configured by the network device for the terminal device, or a pilot resource corresponding to a pilot resource indicator reported by the terminal device.

In a possible design scheme, before determining the first transmission beam of the downlink channel based on the configuration information and the first pilot sequence, the processing module is further configured to determine the first pilot sequence by performing pilot sequence correlation detection on the pilot signal.

In a possible design scheme, the processing module is further configured to: determine the first transmission beam of the downlink channel based on the configuration information and the first pilot sequence before downlink control information DCI is demodulated.

In a possible design scheme, the processing module is further configured to: determine a first reception beam of the downlink channel based on the first transmission beam, and receive a downlink data channel or a downlink control channel by using the first reception beam.

Optionally, the processing module is further configured to receive the downlink data channel or the downlink control channel, by using the first reception beam, on a symbol after an interval greater than or equal to X symbols from the last symbol carrying the pilot signal, where X is an integer greater than or equal to 0.

Optionally, the X symbols are time required for performing the pilot sequence correlation detection and/or beam switching.

In a possible design scheme, the pilot resource includes at least one of the following: a channel state information-reference signal CSI-RS resource, a synchronization information block SSB resource, a tracking reference signal TRS resource, a phase noise tracking reference signal PT-RS resource, a demodulation reference signal DMRS resource, or a sounding reference signal SRS resource.

In a possible design scheme, the configuration information is carried in at least one of the following: RRC signaling, media access control-control element MAC-CE signaling, or DCI.

Optionally, the transceiver module may include a sending module and a receiving module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module, and the storage module stores a program or instructions. When the processing module executes the program or the instructions, the communication apparatus is caused to perform the communication method according to the first aspect.

It should be noted that the communication apparatus according to the third aspect may be a terminal device, may be a chip (system) or another part or component in the terminal device, or may be an apparatus including the terminal device. This is not limited in this application.

In addition, for technical effects of the communication apparatus according to the third aspect, refer to the technical effects of the communication method according to the first aspect. Details are not described herein again.

According to a fourth aspect, a communication apparatus is provided. The communication apparatus includes modules configured to perform the method according to the second aspect, for example, a transceiver module and a processing module.

The transceiver module is configured to: send configuration information to a terminal device, and send a pilot signal to the terminal device. The configuration information indicates a mapping relationship between a pilot sequence and a transmission beam, the pilot signal corresponds to a first pilot sequence, and the pilot sequence includes the first pilot sequence.

In a possible design scheme, the mapping relationship includes a mapping relationship between the pilot sequence and a transmission configuration indicator TCI or a mapping relationship between the pilot sequence and a pilot resource.

In a possible design scheme, the pilot resource is a pilot resource configured by the network device for the terminal device, or a pilot resource corresponding to a pilot resource indicator reported by the terminal device.

In a possible design scheme, the processing module is configured to send a downlink data channel or a downlink control channel to the terminal device by using a first transmission beam of a downlink channel. The transmission beam includes the first transmission beam.

In a possible design scheme, the pilot resource includes at least one of the following: a channel state information-reference signal CSI-RS resource, a synchronization information block SSB resource, a tracking reference signal TRS resource, a phase noise tracking reference signal PT-RS resource, a demodulation reference signal DMRS resource, or a sounding reference signal SRS resource.

In a possible design scheme, the configuration information is carried in at least one of the following: RRC signaling, media access control-control element MAC-CE signaling, or DCI.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module, and the storage module stores a program or instructions. When the processing module executes the program or the instructions, the communication apparatus is caused to perform the method according to the second aspect.

It may be understood that the communication apparatus according to the fourth aspect may be a network device, may be a chip (system) or another part or component in the network device, or may be an apparatus including the network device. This is not limited in this application.

In addition, for technical effects of the communication apparatus according to the fourth aspect, refer to the technical effects of the method according to the second aspect. Details are not described herein again.

According to a fifth aspect, a communication apparatus is provided. The communication apparatus includes a processor. The processor is configured to perform the communication method according to the first aspect or the second aspect.

In a possible design scheme, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design scheme, the communication apparatus according to the fifth aspect may further include a memory. The memory and the processor may be integrated together, or may be disposed separately. The memory may be configured to store a computer program and/or data related to the communication method according to the first aspect or the second aspect.

In embodiments of this application, the communication apparatus according to the fifth aspect may be the network device according to any one of the first aspect or the second aspect, a chip (system) or another part or component in the network device, or an apparatus including the network device. Alternatively, the communication apparatus may be the terminal device according to any one of the first aspect or the second aspect, a chip (system) or another part or component in the terminal device, or an apparatus including the terminal device.

In addition, for technical effects of the communication apparatus according to the fifth aspect, refer to the technical effects of the communication method according to the first aspect or the second aspect. Details are not described herein again.

According to a sixth aspect, a communication apparatus is provided. The communication apparatus includes a processor. The processor is coupled to a memory, and the processor is configured to execute a computer program stored in the memory, to cause the communication apparatus to perform the communication method according to the first aspect or the second aspect.

In a possible design scheme, the communication apparatus according to the sixth aspect may further include a transceiver. The transceiver may be a transceiver circuit or an interface circuit. The transceiver may be used by the communication apparatus according to the sixth aspect to communicate with another communication apparatus.

In embodiments of this application, the communication apparatus according to the sixth aspect may be the network device according to any one of the first aspect or the second aspect, a chip (system) or another part or component in the network device, or an apparatus including the network device. Alternatively, the communication apparatus may be the terminal device according to any one of the first aspect or the second aspect, a chip (system) or another part or component in the terminal device, or an apparatus including the terminal device.

In addition, for technical effects of the communication apparatus according to the sixth aspect, refer to the technical effects of the communication method according to the first aspect or the second aspect. Details are not described herein again.

According to a seventh aspect, a communication apparatus is provided, including a processor and a memory. The memory is configured to store a computer program. When the processor executes the computer program, the communication apparatus is caused to perform the communication method according to the first aspect or the second aspect.

In a possible design scheme, the communication apparatus according to the seventh aspect may further include a transceiver. The transceiver may be a transceiver circuit or an interface circuit. The transceiver may be used by the communication apparatus according to the seventh aspect to communicate with another communication apparatus.

In embodiments of this application, the communication apparatus according to the seventh aspect may be the network device according to any one of the first aspect or the second aspect, a chip (system) or another part or component in the network device, or an apparatus including the network device. Alternatively, the communication apparatus may be the terminal device according to any one of the first aspect or the second aspect, a chip (system) or another part or component in the terminal device, or an apparatus including the terminal device.

In addition, for technical effects of the communication apparatus according to the seventh aspect, refer to the technical effects of the communication method according to the first aspect or the second aspect. Details are not described herein again.

According to an eighth aspect, a communication apparatus is provided, including a processor. The processor is configured to: after being coupled to a memory and reading a computer program in the memory, perform the communication method according to the first aspect or the second aspect based on the computer program.

In a possible design scheme, the communication apparatus according to the eighth aspect may further include a transceiver. The transceiver may be a transceiver circuit or an interface circuit. The transceiver may be used by the communication apparatus according to the eighth aspect to communicate with another communication apparatus.

In embodiments of this application, the communication apparatus according to the eighth aspect may be the network device according to any one of the first aspect or the second aspect, a chip (system) or another part or component in the network device, or an apparatus including the network device. Alternatively, the communication apparatus may be the terminal device according to any one of the first aspect or the second aspect, a chip (system) or another part or component in the terminal device, or an apparatus including the terminal device.

In addition, for technical effects of the communication apparatus according to the eighth aspect, refer to the technical effects of the communication method according to the first aspect or the second aspect. Details are not described herein again.

According to a ninth aspect, a communication system is provided. The communication system includes the terminal device in the foregoing aspects and the network device in the foregoing aspects.

According to a tenth aspect, a computer-readable storage medium is provided, including a computer program or instructions. When the computer program or the instructions are run on a computer, the computer is caused to perform the communication method according to the first aspect or the second aspect.

According to an eleventh aspect, a computer program product is provided, including a computer program or instructions. When the computer program or the instructions are run on a computer, the computer is caused to perform the communication method according to the first aspect or the second aspect.

### BRIEF DESCRIPTION OF DRAWINGS

FIG. 1 is a diagram of a structure of MAC CE signaling for activating a TCI;
FIG. 2 is a diagram 1 in which a network device provides a service for UE according to an embodiment of this application;
FIG. 3 is a diagram 2 in which a network device provides a service for UE according to an embodiment of this application;
FIG. 4 is a diagram 1 of an architecture of a communication system according to an embodiment of this application;
FIG. 5 is a diagram 2 of an architecture of a communication system according to an embodiment of this application;
FIG. 6 is a schematic flowchart of a communication method according to an embodiment of this application;
FIG. 7 is a diagram 3 in which a network device provides a service for UE according to an embodiment of this application;
FIG. 8 is a diagram 4 in which a network device provides a service for UE according to an embodiment of this application;
FIG. 9 is a diagram 1 of a structure of a communication apparatus according to an embodiment of this application; and
FIG. 10 is a diagram 2 of a structure of a communication apparatus according to an embodiment of this application.

### DESCRIPTION OF EMBODIMENTS

For ease of understanding, the following first describes technical terms in embodiments of this application.

### 1. Beam (beam)

As a communication resource, the beam is special directional sending or receiving effect formed by a transmitter or a receiver of a network device or a terminal device by using an antenna array, and is similar to a light beam formed by converging light to a direction by using a flashlight. Signal sending and receiving in a form of beam can effectively increase a signal transmission distance.

The beam may be represented in a new radio (new radio, NR) protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-collocated (quasi-collocated, QCL) information, a QCL assumption, a QCL indication, or the like.

The beam may be indicated by a transmission configuration indicator (transmission configuration indicator, TCI) state (state) parameter, or by a spatial relation (spatial relation) parameter. Therefore, in embodiments of this application, the beam may be replaced with a spatial domain filter, a spatial filter, a spatial domain parameter, a spatial parameter, a spatial domain setting, a spatial setting, QCL information, a QCL assumption, a QCL indication, a TCI-state, a spatial relation, or the like. The TCI-state may include an uplink (uplink, UL) TCI-state and a downlink (downlink, DL) TCI-state. It may be understood that the foregoing terms are equivalent to each other. The beam may alternatively be replaced with another term representing a beam. This is not limited in embodiments of this application.

A beam used to send a signal may be referred to as a transmission beam (transmission beam, Tx beam), and the transmission beam may be signal strength distribution formed in different directions in space after the signal is transmitted by using an antenna. It should be understood that the transmission beam may also be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), a spatial transmission setting (spatial transmission setting), or the like.

It may be understood that a downlink transmission beam may be indicated by a TCI-state, and an uplink transmission beam may be indicated by a spatial relation, an uplink TCI-state, or a sounding reference signal (sounding reference signal, SRS) resource (indicating a transmission beam using the SRS). Therefore, the uplink beam may alternatively be replaced with the SRS resource.

A beam used to receive a signal may be referred to as a reception beam (reception beam, Rx beam), and the reception beam may be signal strength distribution in different directions in space of a radio signal received from an antenna. The reception beam may also be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), a spatial reception setting (spatial reception setting), or the like. An uplink transmission beam may be indicated by using a spatial relation (spatial relation), an uplink TCI-state, or an SRS resource (indicating a transmission beam using the SRS). Therefore, the uplink beam may alternatively be replaced with the SRS resource.

The beam may be a wide beam, a narrow beam, or another type of beam. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, a network device measures different beams by using different resources, a terminal device feeds back measured resource quality, and the network device knows quality of a corresponding beam. During data transmission, beam information is also indicated by a resource corresponding to the beam information. For example, the network device indicates information about a physical downlink shared channel (physical downlink shared channel, PDSCH) beam of the terminal device through a TCI field in downlink control information (downlink control information, DCI). During beam measurement, each beam of the network device corresponds to one resource. Therefore, an index of the resource may uniquely identify a beam corresponding to the resource.

It should be understood that a plurality of beams having same or similar communication features are considered as one beam. One beam may include one or more antenna ports, and is used to transmit a data channel, a control channel, a sounding signal, and the like. The one or more antenna ports forming the beam may alternatively be considered as one antenna port set.

### 2. TCI-state

The network device may generate different beams that point to different transmission directions. In downlink data transmission, when sending data to a terminal device by using a specific beam, the network device needs to notify the terminal device of information about the transmission beam used by the network device. In this way, the terminal device can receive, by using a reception beam corresponding to the transmission beam, the data sent by the network device. In a release 15 (release, R15)/R16 protocol of the 3rd Generation Partnership Project (3rd generation partnership project, 3GPP), the network device may indicate, to the terminal device by using the TCI field in the DCI, related information of the transmission beam used by the network device.

For example, a size of the TCI field is three bits, and may specifically indicate eight different field values (codepoints). Each value of the TCI field corresponds to one TCI-state index, and the TCI-state index may uniquely identify one TCI-state. The TCI-state is configured by the network device for each terminal device. The TCI-state may include several parameters, and the related information of the transmission beam may be determined based on these parameters.

Each TCI-state may include a TCI-state index (TCI-StateId) of the TCI-state and two QCL messages (QCL-information, QCL-Info). Each QCL-Info includes a cell (cell) field identity (identity, ID) and a bandwidth part (bandwidth part, BWP) identity, indicating a specific BWP of a specific cell for which the TCI-state is used. In other words, different QCL-Info may be configured for different BWPs of different cells or a same cell. The QCL-Info further includes a reference signal (referenceSignal, RS) for indicating forming a QCL relationship with which reference signal resource.

In the R15/R16 protocol, the term "beam" is usually not directly used, and the beam is usually replaced with another term. For example, in both data transmission and channel measurement, the beam corresponds to a reference signal resource, and one beam corresponds to one reference signal resource. Therefore, forming a QCL relationship with which reference signal resource herein is essentially forming a QCL relationship with which beam.

The QCL relationship means that two reference signal resources (or two antenna ports, where antenna ports and reference signal resources are also in a one-to-one correspondence) have some same spatial parameters. Specific spatial parameters that are the same depend on a type of the QCL-Info, to be specific, another QCL type (qcl-Type) field of the QCL-Info. qcl-Type may have four values {typeA, typeB, typeC, typeD}. TypeD is used as an example. TypeD indicates that the two reference signal resources have same spatial reception parameter information. That is, two beams have a same reception beam. It may be understood that at most one of two QCL-Info included in the TCI-state can be typeD.

In the R15/R16 protocol, the network device indicates, to one terminal device, information about a reception beam of a data transmission beam by using the TCI-state, including configuration, activation, and indication of the TCI-state. Details are described below.

### (1) Configuration of the TCI-state:

The network device may configure a plurality of TCI-states for the terminal device by using radio resource control (radio resource control, RRC) signaling, and each of these TCI-states includes QCL-Info of typeD. It may be understood that the network device may alternatively configure TCI-states that do not include the QCL-info of typeD. However, these TCI-states do not indicate the data transmission beam, and therefore are not further described herein.

### (2) Activation of the TCI-state:

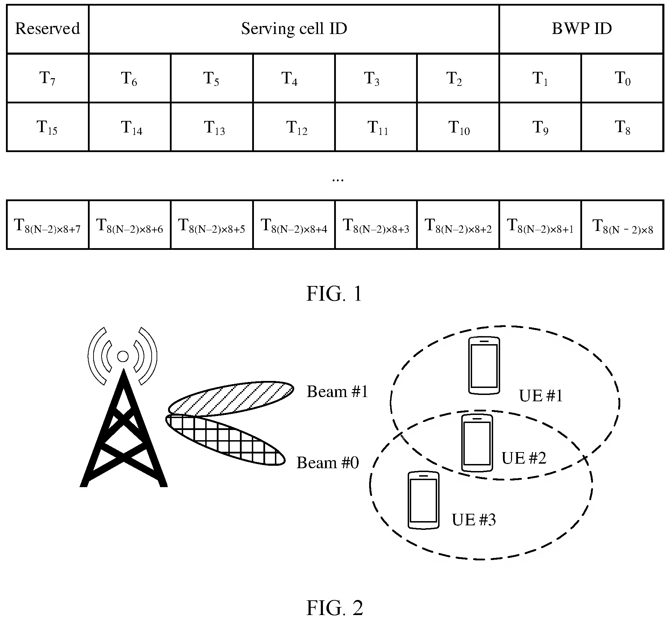

After configuring the plurality of TCI-states, the network device further needs to activate eight of the TCI-states by using medium access control-control element (medium access control-control element, MAC CE) signaling. The eight TCI-states one-to-one correspond to eight values of the TCI field in the DCI. To be specific, the specific eight TCI-states corresponding to the eight values of the TCI field in the DCI are determined by using the MAC CE signaling. FIG. 1 is a diagram of a structure of MAC CE signaling for activating a TCI. As shown in FIG. 1, the MAC CE signaling may include the following fields: reserved (reserved, R), serving cell (serving cell) ID, BWP ID, and T₀ to T_{(N-2)×8+7}.

The reserved field may be an undefined bit or a bit reserved for direct subsequent use, occupies one bit (bit) in total, and may be denoted as R. The serving cell ID field may indicate an identity of a cell of the network device, and occupies five bits in total. The BWP ID may indicate an identity of a bandwidth part of the network device, and occupies two bits in total.

T₀ to T_{(N-2)×8+7} respectively correspond to TCI-states whose indexes are 0 to (N - 2) × 8 + 7 configured in the first step, each field occupies one bit, and a value of the one bit may be 0 or 1. When the value of the one bit is 1, it indicates that the TCI-state is activated. When the value of the one bit is 0, it indicates that the TCI-state is not activated. It may be understood that, theoretically, each piece of MAC CE signaling may have eight active fields whose values are 1, and values of the rest fields are all 0. TCI-states corresponding to the eight fields whose values are 1 are the eight TCI-states corresponding to the eight values of the TCI field in the DCI.

For example, the eight fields are in one-to-one correspondence with activated TCI-states with smallest indexes in the MAC CE signaling, and so on. It may be understood that there are many types of MAC-CE signaling, and in addition to the MAC-CE signaling used for TCI-state activation, there are many MAC-CE signaling for other purposes. Embodiments of this application relate only to MAC-CE signaling used for TCI-state/TCI-state combination activation. Therefore, unless otherwise specified, the MAC-CE signaling in embodiments of this application is such MAC-CE signaling.

### (3) Indication of the TCI-state:

The network device indicates a specific TCI-state by using the TCI field in the DCI. For example, a value of the TCI field in the DCI sent by the network device to the terminal device is 000, indicating that a TCI-state corresponding to 000 is used for the data transmission beam. An RS included in QCL-Info whose type is typeD in the TCI-state is a channel state information-reference signal (channel state information-reference signal, CSI-RS) whose index is #1, indicating that a beam for data transmission is the same as a reception beam corresponding to the CSI-RS whose index is #1. The reception beam corresponding to the CSI-RS whose index is #1 may be determined through a beam measurement procedure, and is known to the terminal device. Therefore, the terminal device may determine, based on a specific value of the TCI field, the reception beam corresponding to the data transmission beam, and receive data by using the corresponding reception beam.

### 3. Spatial relation

A transmission beam for uplink transmission is indicated by the spatial relation, whose function is similar to that of the TCI-state. The spatial relation is used to inform the terminal device of a specific transmission beam to be used for the uplink transmission. The uplink transmission also needs to be first configured by using the RRC signaling. The spatial relation may include an ID of the spatial relation, a cell ID, a target reference signal resource, a path loss measurement reference signal, a power control parameter, and the like. The target reference signal resource indicates a corresponding uplink beam. The target reference signal resource may be one of an SRS, a synchronization signal block (synchronization signal block, SSB), or a CSI-RS.

If a spatial relation #1 is used for the uplink transmission, and the spatial relation #1 includes a target reference signal resource #2, it indicates that the transmission beam used for the uplink transmission is a transmission/reception beam of a target reference signal. For example, when the target reference signal resource is an uplink resource SRS, it indicates that the transmission beam used for the uplink transmission is a transmission beam of the SRS (where the transmission beam of the SRS is known). For another example, when the target reference signal resource is a downlink resource such as an SSB/a CSI-RS, it indicates that the transmission beam used for the uplink transmission is a reception beam of the SSB/the CSI-RS (where the reception beam of the SSB/CSI-RS is known).

The network device may configure a plurality of spatial relations for the terminal device, and then activate, by using the MAC CE signaling, one of the spatial relations for corresponding data transmission. The uplink transmission includes a physical uplink control channel (physical uplink control channel, PUCCH), an SRS, a physical uplink shared channel (physical uplink shared channel, PUSCH), and the like, and all of them require corresponding spatial relations. It may be understood that a spatial relation of the PUCCH is indicated by using the MAC-CE signaling, and a spatial relation of the SRS is also indicated by using the MAC-CE signaling. During PUSCH transmission, a specific SRS is associated, and a spatial relation of the SRS is used for transmission.

Currently, in a 6th generation (6th generation, 6G) mobile communication scenario, the network device side is equipped with an ultra-large-scale antenna array and adopts hybrid beamforming, and different users may be paired in a digital domain based on a same analog beam. In this case, to improve a multi-user pairing probability in a cell, a same user may be served by a plurality of different analog beams. Channel quality indicators (channel quality indicators, CQIs), precoding matrix indicators (precoding matrix indicators, PMIs), or rank indicators (rank indicators, RIs) of the plurality of analog beams need to be fed back for the same user, and the user maintains different reception beams for the different analog beams.

For a burst service on a live network, according to a real-time scheduling requirement, the network device determines an analog beam to be scheduled at a current moment and a scheduled user in the beam. For example, as shown in FIG. 2, in a slot T1, UE #1 and UE #2 in a network have to-be-transmitted services. In this case, the network device may schedule a beam #1 to transmit data for the UE #1 and the UE #2. In a slot T2, the UE #2 and UE #3 in the network have to-be-transmitted services. In this case, the network device may schedule a beam #0 to transmit data for the UE #2 and the UE #3. In other words, different beams may be used for transmission for a same user at different moments.

In an NR protocol, the network device side may add the TCI to the DCI, to indicate, to the terminal device, information about a transmission beam of a PDSCH scheduled by a current PDCCH, to indicate the terminal device to receive the PDSCH by using an appropriate reception beam, correctly demodulating the PDSCH. When a processing delay caused by demodulation of the DCI and beam switching by the terminal device is considered, after receiving a PDCCH signal, the terminal device needs to wait for an interval of duration (timeDuration) symbols to update the reception beam of the terminal device based on a TCI indication carried in the DCI.

The terminal device needs to receive, based on a new reception beam, PDSCH data after timeDuration. A specific value of timeDuation is related to a processing capability of the terminal device. The terminal device reports a capability parameter, namely, QCL duration (timeDurationForQCL), to the network device, notifying a processing delay required for the terminal device to use spatial domain QCL information indicated by the PDCCH after PDCCH reception.

However, a blind detection of the DCI by the terminal device requires specific processing time. In this case, when receiving PDSCH data on first several symbols in a current slot, the terminal device does not know specific information of the TCI indication carried in the DCI. Consequently, the reception beam used by the terminal device is not necessarily the most appropriate one, affecting a system capacity.

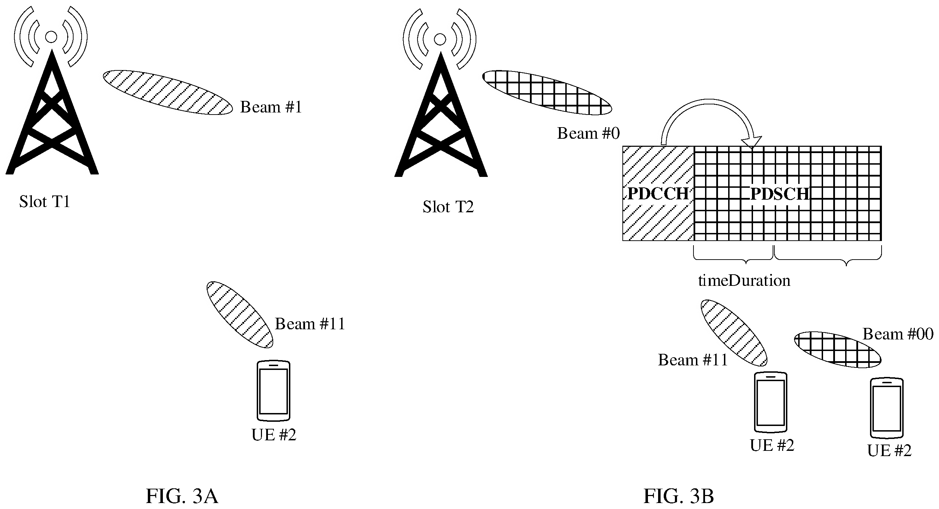

For example, as shown in FIG. 3A, in a slot T1, UE #2 has a to-be-transmitted service. In this case, a network may schedule a beam #1 to transmit data for the UE #2. Then, as shown in FIG. 3B, in a slot T2, the UE #2 has a to-be-transmitted service. In this case, the network may schedule a beam #0 to transmit data for the UE #2. It is assumed that a reception beam corresponding to the beam #1 is a beam #11, and a reception beam corresponding to the beam #0 is a beam #00.

However, the blind detection of the DCI by the terminal device requires specific timeDuration. In this case, when receiving PDSCH data on first several symbols in the slot T2, for example, symbols corresponding to timeDuration, the UE #2 does not know the specific information of the TCI indication carried in the DCI in the PDCCH. As a result, the UE #2 still receives the PDSCH data on the first several symbols in the slot T2 by using the beam #11 corresponding to the beam #1 used in the slot T1. This results in poor quality of a signal received by the UE #2, leading to failure in demodulation of the PDSCH data, and affecting a system capacity.

For the foregoing technical problems, embodiments of this application provide the following technical solutions, to increase a system capacity.

The following describes technical solutions of this application with reference to accompanying drawings.

The technical solutions in embodiments of this application may be applied to various communication systems, for example, a wireless fidelity (wireless fidelity, Wi-Fi) system, a vehicle-to-everything (vehicle-to-everything, V2X) communication system, a device-to-device (device-to-device, D2D) communication system, a 4G, for example, long term evolution (long term evolution, LTE), system, a worldwide interoperability for microwave access (worldwide interoperability for microwave access, WiMAX) communication system, a 5G, for example, new radio, system, a future communication system, and the like.

All aspects, embodiments, or features are presented in embodiments of this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are for representing giving an example, an illustration, or a description. Any embodiment or design scheme described as an "example" in embodiments of this application should not be explained as being more preferred or having more advantages than another embodiment or design scheme. To be precise, the term "example" is for presenting a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in embodiments of this application may indicate an "or" relationship.

It may be understood that in embodiments of this application, an "indication" may include a direct indication, an indirect indication, an explicit indication, or an implicit indication. When a piece of indication information is described as indicating A, it may be understood that the indication information carries A, directly indicates A, or indirectly indicates A.

In embodiments of this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmitting end device by sending configuration information to a receiving end device.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

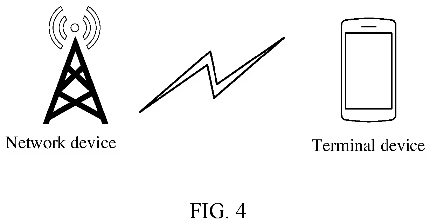

For ease of understanding embodiments of this application, a communication system shown in FIG. 4 is first used as an example to describe in detail a communication system applicable to embodiments of this application. For example, FIG. 4 is a diagram 1 of an architecture of a communication system to which a communication method according to an embodiment of this application is applicable.

As shown in FIG. 4, the communication system mainly includes a network device and a terminal device.

There may be a plurality of network devices, for example, a first network device, a second network device, and a third network device. The network device may be a device having a wireless transceiver function, or may be a chip or a chip system disposed in the device, and is located in an access network (access network, AN) of the communication system, to provide an access service for a terminal. For example, the network device may be referred to as a radio access network (radio access network, RAN) device, and may be specifically an access network device in a next-generation mobile communication system. Alternatively, in the next-generation mobile communication system, the network device may be named in another manner, which falls within the protection scope of embodiments of this application. This is not limited in this application. Alternatively, the network device may include a next generation NodeB (next generation NodeB, gNB) in a 5G, for example, new radio (new radio, NR), system, or one antenna panel or a group of antenna panels (including a plurality of antenna panels) of a base station in 5G, or may be a network node forming a gNB, a transmit/receive point (transmit/receive point, TRP), or a transmission measurement function (transmission measurement function, TMF), for example, a central unit (central unit, CU), a distributed unit (distributed unit, DU), or a CU-control plane (control plane, CP), a CU-user plane (user plane, UP), a radio unit (radio unit, RU), an RSU having a function of a base station, a wired access gateway, a 5G core network element, or the like. Alternatively, the network device may further include an access point (access point, AP) in a Wi-Fi system, a wireless relay node, a wireless backhaul node, macro base stations in various forms, a micro base station (also referred to as a small cell), a relay station, an access point, a wearable device, a vehicle-mounted device, and the like.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network (core network, CN). This is not limited herein.

In different systems, the CU (or the CU-CP and the CU-UP), the DU, or the RU may alternatively have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus for implementing a function of the network device may be a network device, or may be an apparatus, for example, a chip system, that can support the network device in implementing the function. The apparatus may be mounted in the network device or used in combination with the network device.

There may be one or more terminal devices, for example, a first terminal device, a second terminal device, and a third terminal device. The terminal device may be a terminal device having a transceiver function, or may be a chip or a chip system disposed in a terminal device. The terminal device may also be referred to as user equipment (user equipment, UE), an access terminal device, a subscriber unit (subscriber unit), a subscriber station, a mobile station (mobile station, MS), a remote station, a remote terminal device, a mobile device, a user terminal device, a terminal device, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal device, a computer having a wireless transceiver function, a virtual reality (virtual reality, VR) terminal device, an augmented reality (augmented reality, AR) terminal device, a smart home device (for example, a refrigerator, a television, an air conditioner, or a meter), a smart robot, a robot arm, a workshop device, a wireless terminal device in self driving, a wireless terminal device in industrial control (industrial control), a wireless terminal device in self driving (self driving), a wireless terminal device in telemedicine (remote medical), a wireless terminal device in a smart grid (smart grid), a wireless terminal device in transportation safety (transportation safety), a wireless terminal device in a smart city (smart city), a wireless terminal device in a smart home (smart home), a vehicle-mounted terminal device, a roadside unit (roadside unit, RSU) or the like having a terminal device function, a flight device (for example, a smart robot, a hot air balloon, an uncrewed aerial vehicle, or an airplane), or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The terminal device may alternatively be another device having a terminal device function. For example, the terminal device may alternatively be a device that functions as a terminal device in D2D communication.

A form of the terminal device is not limited in embodiments of this application. An apparatus for implementing a function of the terminal device may be a terminal device, or may be an apparatus, for example, a chip system, that supports the terminal device in implementing the function. The apparatus may be mounted in the terminal device or used in combination with the terminal device. In this embodiment of this application, the chip system may include a chip, or may include a chip and another discrete component.

In the communication system, the network device may preconfigure, for the terminal device, a mapping relationship between a pilot sequence and a transmission beam. The terminal device may determine, based on the mapping relationship and a first pilot sequence corresponding to a received pilot signal, a first transmission beam, corresponding to the first pilot sequence, of a downlink channel, so that the terminal device can subsequently determine a corresponding reception beam based on the first transmission beam. This allows for faster reception of the downlink channel by using the newly matched reception beam, improving a system capacity and user experience.

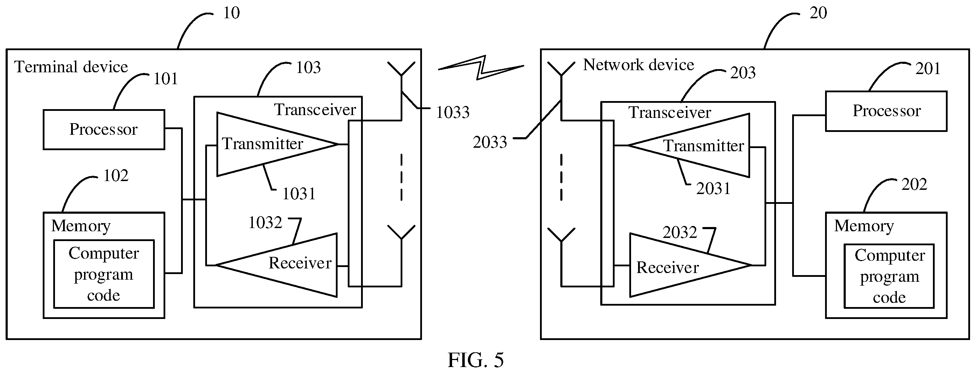

For example, FIG. 5 is a diagram 2 of an architecture of a communication system to which a communication method according to an embodiment of this application is applicable. As shown in FIG. 5, communication between a network device and a terminal device in the communication system may alternatively be represented in another form. The terminal device 10 includes a processor 101, a memory 102, and a transceiver 103. The transceiver 103 includes a transmitter 1031, a receiver 1032, and a plurality of antennas 1033 (antenna panels). The network device 20 includes a processor 201, a memory 202, and a transceiver 203. The transceiver 203 includes a transmitter 2031, a receiver 2032, and at least one antenna 2033 (antenna panel). The receiver 1032 may be configured to receive transmission control information through the antenna 1033. The transmitter 1031 may be configured to send transmission feedback information to the network device 20 through the antenna 1033. The transmitter 2031 may be configured to send transmission control information to the terminal device 10 through the antenna 2033. The receiver 2032 may be configured to receive, through the antenna 2033, transmission feedback information sent by the terminal device 10.

It may be understood that FIG. 4 and FIG. 5 are merely simplified diagrams illustrated for ease of understanding. The communication system may further include another network device and/or another terminal device, which are not shown in FIG. 4 or FIG. 5.

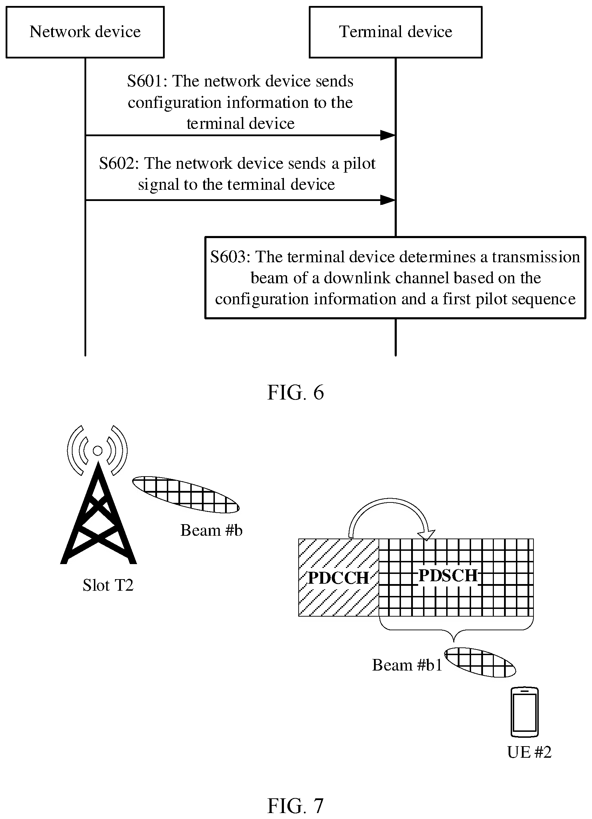

For ease of understanding, the following specifically describes the communication method provided in embodiments of this application with reference to FIG. 6 to FIG. 8.

For example, FIG. 6 is a schematic flowchart of a communication method according to an embodiment of this application. The method may be applicable to communication between the network device and the terminal device in the foregoing communication system.

Specifically, as shown in FIG. 6, a procedure of the communication method is as follows.

S601: The network device sends configuration information to the terminal device. Accordingly, the terminal device receives the configuration information from the network device.

The configuration information may indicate a mapping relationship between a pilot sequence and a transmission beam, and the configuration information may be carried in at least one of the following: RRC signaling, MAC-CE signaling, or DCI. This is not limited. The pilot sequence may be used for channel estimation and synchronization, to ensure channel estimation quality. The pilot sequence may be associated with any channel, for example, a downlink control channel, a downlink data channel, an uplink control channel, an uplink data channel, or the like. This is not limited. For example, the pilot sequence may be a CSI-RS sequence, an SSB sequence, a tracking reference signal (tracking reference signal, TRS) sequence, a phase noise tracking reference signal (phase noise tracking reference signal, PT-RS) sequence, a demodulation reference signal (demodulation reference signal, DMRS) sequence, a sounding reference signal SRS resource, or the like. This is not limited. For ease of understanding, in this embodiment of this application, an example in which the pilot sequence is the DMRS sequence is used for subsequent description. It may be understood that, in this embodiment of this application, the DMRS sequence is associated with a PDCCH, and may also be referred to as a PDCCH-DMRS sequence. Details are not described subsequently.

It may be understood that the pilot sequence may be a pilot sequence set, and the pilot sequence set may include at least one pilot sequence. This is not limited.

In a possible design scheme, the pilot sequence may be represented by different scrambling (scrambling) identifiers, or may be represented by different parameter values of a sequence expression. The following uses the following two cases as an example for specific description.

Case 1: The pilot sequence is represented by different scrambling identifiers.

For example, the network device may configure a plurality of PDCCH-DMRS scrambling ID values for each control resource set (control resource set, CORESET) of the terminal device, and different IDs may correspond to different DMRS sequences. It may be understood that the CORESET may be a time-frequency domain resource set carrying downlink control information, and the terminal device may detect the PDCCH on the time-frequency domain resource set corresponding to the CORESET.

For example, the PDCCH-DMRS scrambling ID values may be a DMRS sequence #0, a DMRS sequence #1, a DMRS sequence #2, ..., and a DMRS sequence #n, to represent different DMRS sequences.

Optionally, the network device may select, from an existing value set of PDCCH-DMRS scrambling IDs, a plurality of DMRS sequences with a high auto-correlation peak value and a low cross-correlation peak value, and configure the plurality of DMRS sequences for the terminal device, to represent different transmission beams. This is not limited.

Case 2: The pilot sequence is represented by different parameter values in the sequence expression.

For example, the network device may configure one PDCCH-DMRS scrambling ID value for each CORESET of the terminal device. In this case, the network device may update an initialization formula of a PDCCH-DMRS pseudo-random sequence generator in an existing protocol, and represent different DMRS sequences by using different parameter values.

An updated initialization formula of a PDCCH-DMRS sequence may be represented by the following formula: ${C}_{init} = \left({2}^{17 - k}\left({i}_{beam}+1\right)\left({N}_{symb}^{slot}{n}_{s , f}^{μ}+l+1\right)\left(2{N}_{ID}+1\right)+{2}^{k}\left({i}_{beam}+1\right)+2{N}_{ID}\right) mod {2}^{31}$ where *Cᵢₙᵢₜ* is the DMRS sequence; *k* is a predefined value, a value of which may be 2, 3, 4, or 5; *l* is an orthogonal frequency-division multiplexing (orthogonal frequency-division multiplexing, OFDM) symbol index included in one slot; ${n}_{s , f}^{μ}$ is a slot index in one system frame; ${N}_{symb}^{slot}$ is a quantity of symbols in each slot; and *N_{ID}* is a cell identity.

Different values of *i_{beam}* may correspond to different DMRS sequences, and *i_{beam}* may carry X-bit beam indication information. For example, when the network device expects to indicate one of N beams by using the DMRS sequence, $X = \left⌈{log 2}^{N}\right⌉$. For example, when the network device expects to indicate 10 beams by using the DMRS sequence, $X = \left⌈{log 2}^{10}\right⌉ = 4$, that is, *i_{beam}* may carry 4-bit beam indication information. Different values of the 4-bit beam indication information may represent four beams, or four different DMRS sequences. The transmission beam may be a downlink transmission beam, and is used by the network device to send a downlink data channel or a downlink control channel, for example, a PDCCH or a PDSCH. This is not limited.

It may be understood that the transmission beam may be a transmission beam set, the transmission beam set may include at least one transmission beam, and a quantity of transmission beams is the same as a quantity of pilot sequences. This is not limited. It should be understood that for specific descriptions of the transmission beam, refer to the related descriptions of the foregoing technical terms. Details are not described herein again.

The mapping relationship may include a mapping relationship between the pilot sequence and a transmission configuration indicator (TCI), or a mapping relationship between the pilot sequence and a pilot resource. The following uses the following two cases as an example for specific description.

Case 3: The mapping relationship between the pilot sequence and the transmission configuration indicator (TCI).

The TCI may indicate a beam, the TCI may be a TCI-state, and the TCI-state may indicate a PDSCH spatial domain reception parameter. It should be understood that for specific descriptions of the TCI-state, refer to the related descriptions of the foregoing technical terms. Details are not described herein again. It may be understood that the mapping relationship between the pilot sequence and the TCI is a mapping relationship between the DMRS sequence and the TCI-state, and each DMRS sequence may correspond to one TCI-state.

The following specifically describes Case 3 in the following two manners.

Manner 1: The network device configures a mapping relationship between the pilot sequence and each TCI-state in a TCI-state set. For example, the network device may configure, for the terminal device, a TCI-state set used for PDSCH spatial domain reception parameter indication. For example, the network device may send the TCI-state set to the terminal device by using RRC signaling. This is not limited. Then, the network device may send the configuration information to the terminal device, to indicate that each DMRS sequence is associated with a TCI-state in the TCI-state set, or that each DMRS sequence is in a one-to-one correspondence with a TCI-state in the TCI-state set. It may be understood that the TCI-state may be represented by TCI-StateId of the TCI-state. That each DMRS sequence is associated with a TCI-state in the TCI-state set may alternatively be understood as that each DMRS sequence is associated with or in a one-to-one correspondence with TCI-stateId corresponding to a TCI-state in the TCI-state set. This is not limited.

For ease of understanding, an example in which the pilot sequence is represented by different scrambling identifiers is used below for description. Details are not described subsequently. For example, as shown in Table 1, the configuration information may indicate that: A DMRS sequence #0 is associated with a TCI-state corresponding to TCI-StateId=0; a DMRS sequence #1 is associated with a TCI-state corresponding to TCI-StateId=1; a DMRS sequence #2 is associated with a TCI-state corresponding to TCI-StateId=2; ...; and a DMRS sequence #n is associated with a TCI-state corresponding to TCI-StateId=n, and so on. This is not limited.

**Table 1**

| DMRS sequences | TCI-states |
|---|---|
| DMRS sequence #0 | TCI-state corresponding to TCI-StateId=0 |
| DMRS sequence #1 | TCI-state corresponding to TCI-StateId=1 |
| DMRS sequence #2 | TCI-state corresponding to TCI-StateId=2 |
| ... | ... |
| DMRS sequence #n | TCI-state corresponding to TCI-StateId=n |

It may be understood that the TCI-state corresponding to TCI-StateId=0, the TCI-state corresponding to TCI-StateId=1, the TCI-state corresponding to TCI-StateId=2, ..., and the TCI-state corresponding to TCI-StateId=n in Table 1 are all TCI-states in the TCI-state set configured by the network device for the terminal device.

In this manner, optionally, the network device may configure a mapping relationship between the PDCCH-DMRS sequence and the transmission beam for a user by using the RRC signaling. In other words, the configuration information may be carried in the RRC signaling. The network device may configure a plurality of PDCCH-DMRS scrambling IDs in the CORESET, and each PDCCH-DMRS-scrambling ID may be associated with one TCI-state. Details are not described again.

Optionally, the TCI-state may be a unified (unified) TCI-state, a TCI-UL-State, or the like. This is not limited.

Manner 2: The network device configures a mapping relationship between the pilot sequence and each TCI-state in an activated TCI-state set.

For example, the network device may configure, for the terminal device, a TCI-state set used for PDSCH spatial domain reception parameter indication. For example, the network device may send the TCI-state set to the terminal device by using RRC signaling. This is not limited. Then, the network device may activate a portion of TCI-states in the TCI-state set by using MAC-CE signaling, and the portion of TCI-states are denoted as the activated TCI-state set. Then, the network device sends the configuration information to the terminal device, to indicate that each DMRS sequence is associated with a TCI-state in the activated TCI-state set, or that each DMRS sequence is in a one-to-one correspondence with a TCI-state in the activated portion of TCI-states.

For example, as shown in Table 2, the configuration information may indicate that: The DMRS sequence #0 is associated with a first TCI-state in the activated TCI-state set; the DMRS sequence #1 is associated with a second TCI-state in the activated TCI-state set; the DMRS sequence #2 is associated with a third TCI-state in the activated TCI-state set; ...; and the DMRS sequence #n is associated with the third TCI-state in the activated TCI-state set, and so on. This is not limited.

**Table 2**

| DMRS sequences | TCI-states |
|---|---|
| DMRS sequence #0 | First TCI-state in the activated TCI-state set |
| DMRS sequence #1 | Second TCI-state in the activated TCI-state set |
| DMRS sequence #2 | Third TCI-state in the activated TCI-state set |
| ... | ... |
| DMRS sequence #n | TCI-state corresponding to TCI-StateId=n+1 |

In this manner, optionally, the network device may configure a mapping relationship between the PDCCH-DMRS sequence and the transmission beam for a user by using the MAC-CE signaling. In other words, the configuration information may be carried in the MAC-CE signaling. For example, the network device may configure a plurality of PDCCH-DMRS scrambling IDs in the CORESET by using the RRC signaling. Then, the network device may define a new MAC-CE format for TCI-states activation (activation)/deactivation (deactivation) for terminal device-specific PDCCH-DMRS (TCI-states activation/deactivation for UE-specific PDCCH-DMRS). The newly defined MAC-CE format may include at least one of the following parameters: a CORESET ID, a TCI-state ID, a BWP ID, or a serving cell ID. This is not limited.

For example, a first PDCCH-DMRS scrambling ID of the RRC signaling corresponds to a first TCI-state ID carried by the MAC-CE, and a second PDCCH-DMRS scrambling ID of the RRC signaling corresponds to a second TCI-state ID carried by the MAC-CE, and so on.

For example, it is assumed that the TCI-state set configured by the network device for the terminal device by using the RRC signaling includes 128 TCI-states, and TCI-stateId corresponding to the 128 TCI-states are respectively 0 to 127. The network device activates a portion of the 128 TCI-states by using the newly defined MAC-CE format, for example, a TCI-state corresponding to TCI-stateId=0, a TCI-state corresponding to TCI-stateId=3, a TCI-state corresponding to TCI-stateId=5, and a TCI-state corresponding to TCI-stateId=9. In other words, TCI-state IDs carried by the MAC-CE include: TCI-stateId=0, TCI-stateId=3, TCI-stateId=5, and TCI-stateId=9.

The sequences that may be configured in the CORESET by the network device by using the RRC signaling include the DMRS sequence #0, the DMRS sequence #1, the DMRS sequence #2, and the DMRS sequence #3. In this case, the DMRS sequence #0 is associated with the TCI-state corresponding to TCI-stateId=0, the DMRS sequence #1 is associated with the TCI-state corresponding to TCI-stateId#3, the DMRS sequence #2 is associated with the TCI-state corresponding to TCI-stateId#5, and the DMRS sequence #3 is associated with the TCI-state corresponding to TCI-stateId#9.

It should be understood that, with reference to the foregoing Manner 1 and Manner 2, when QCL-Info in the TCI-state is configured as qcl-type=typeD, an associated reference signal may be a CSI-RS, an SSB, or the like. This is not limited. The CSI-RS may be represented by a non-zero power (non-zero power, NZP) CSI-RS resource ID (resourceId), namely, NZP-CSI-RS-resourceId, and the SSB may be represented by an SSB index (index), namely, SSB-index. In this case, the terminal device may consider that the DMRS sequence associated with the TCI-state has a same spatial domain transmission filter as the reference signal. In other words, the terminal device may receive a PDSCH signal based on the spatial domain transmission filter of the reference signal.

Case 4: The mapping relationship between the pilot sequence and the pilot resource.

The pilot resource may be used for downlink beam management, channel state information measurement, or the like. For example, the pilot resource may include at least one of the following: a channel state information-reference signal CSI-RS resource, a synchronization information block SSB resource, a TRS resource, a PT-RS resource, a DMRS resource, an SRS resource, or the like. This is not limited. It may be understood that each pilot resource may correspond to one transmission beam, and the terminal device may determine a transmission beam corresponding to a corresponding pilot resource (for example, a pilot resource corresponding to the first pilot sequence below) as a transmission beam of a downlink channel. For ease of understanding, the following uses an example in which the pilot resource is the CSI-RS resource for description. Details are not described subsequently.

The following specifically describes Case 4 in the following two manners.

Manner 3: The pilot resource is a pilot resource configured by the network device for the terminal device.

For example, the network device may configure, for the terminal device, a pilot resource set used for downlink beam management or channel state information measurement, for example, a CSI-RS resource set (CSI-RS resourceSet). For example, the network device may send the CSI-RS resource set to the terminal device by using the RRC signaling. This is not limited. Then, the network device may send the configuration information to the terminal device, to indicate that each DMRS sequence is associated with a CSI-RS resource in the CSI-RS resource set, or that each DMRS sequence is in a one-to-one correspondence with a CSI-RS resource in the CSI-RS resource set. It may be understood that the CSI-RS resource may be represented by NZP CSI-RS resourceId. That each DMRS sequence is associated with a CSI-RS resource in the CSI-RS resource set may alternatively be understood as that each DMRS sequence is associated with or in a one-to-one correspondence with NZP CSI-RS resourceId corresponding to a CSI-RS resource in the CSI-RS resource set. This is not limited.

For example, as shown in Table 3, the configuration information may indicate that: The DMRS sequence #0 is associated with a CSI-RS resource corresponding to NZP CSI-RS resourceId=0; the DMRS sequence #1 is associated with a CSI-RS resource corresponding to NZP CSI-RS resourceId=1; the DMRS sequence #2 is associated with a CSI-RS resource corresponding to NZP CSI-RS resourceId=2; ...; and the DMRS sequence #n is associated with a CSI-RS resource corresponding to NZ CSI-RS resourceId=n, and so on. This is not limited.

**Table 3**

| DMRS sequences | CSI-RS resources |
|---|---|
| DMRS sequence #0 | CSI-RS resource corresponding to NZP CSI-RS resourceId=0 |
| DMRS sequence #1 | CSI-RS resource corresponding to NZP CSI-RS resourceId=1 |
| DMRS sequence #2 | CSI-RS resource corresponding to NZP CSI-RS resourceId=2 |
| ... | ... |
| DMRS sequence #n | CSI-RS resource corresponding to NZP CSI-RS resourceId=n |

It may be understood that the CSI-RS resource corresponding to NZP CSI-RS resourceId=0, the CSI-RS resource corresponding to NZP CSI-RS resourceId=1, the CSI-RS resource corresponding to NZP CSI-RS resourceId=2, ..., and the CSI-RS resource corresponding to NZP CSI-RS resourceId=n in Table 3 are all CSI-RS resources in the CSI-RS resource set configured by the network device for the terminal device.

Manner 4: The pilot resource is a pilot resource corresponding to a pilot resource indicator reported by the terminal device.

The pilot resource indicator may indicate the pilot resource. For example, the pilot resource is the CSI-RS resource. The pilot resource indicator may be a CSI-RS resource indicator (CSI-RS resource indicator, CRI) in channel state information (channel state information, CSI), and each CRI may correspond to one CSI-RS resource. The network device may configure a mapping relationship between the DMRS sequence and a CSI-RS resource corresponding to a reported CRI in the CSI.

For example, the network device may configure one or more CSI report (report) configurations for the terminal device. One CSI-RS resource set (or NZP CSI resourceSet or the like) used for channel measurement may be configured for each CSI report, and the CSI-RS resource set may include one or more CSI-RS resources. The terminal device may select a CRI to be reported. For example, if the CRI reported by the terminal device in the CSI is 0, the CRI corresponds to a first CSI-RS resource in the CSI-RS resource set; or if the CRI reported by the terminal device in the CSI is 1, the CRI corresponds to a second CSI-RS resource in the CSI-RS resource set, and so on. Details are not described. The network device may determine a corresponding pilot resource according to the reported CRI, and configure a corresponding pilot sequence for the portion of pilot resources.

It may be understood that CSI reporting may be used for reporting of a reference signal received power (reference signal received power, RSRP) or an L1-signal to interference plus noise ratio (signal to interference plus noise ratio, SINR) for beam management, or may be used for reporting of an RI, a CQI, a PMI, or the like. This is not limited. For example, as shown in Table 4, the configuration information may indicate that: The DMRS sequence #0 is associated with a CSI-RS resource corresponding to a first CRI reported in the CSI; the DMRS sequence #1 is associated with a CSI-RS resource corresponding to a second CRI reported in the CSI; the DMRS sequence #2 is associated with a CSI-RS resource corresponding to a third CRI reported by the terminal device in the CSI; ...; and the DMRS sequence #n is associated with a CSI-RS resource corresponding to an (n+1)^{th} CRI reported by the terminal device in the CSI, and so on. This is not limited.

**Table 4**

| DMRS sequences | CSI-RS resources |
|---|---|
| DMRS sequence #0 | Associated with the CSI-RS resource corresponding to the first CRI reported in the CSI |
| DMRS sequence #1 | Associated with the CSI-RS resource corresponding to the second CRI reported in the CSI |
| DMRS sequence #2 | Associated with the CSI-RS resource corresponding to the third CRI reported in the CSI |
| ... | ... |
| DMRS sequence #n | Associated with the CSI-RS resource corresponding to the (n+1)^{th} CRI reported in the CSI |

For example, it is assumed that the CSI-RS resource set includes four CSI-RS resources, namely, {CSI-RS resourcesId=3, CSI-RS resourcesId=9, CSI-RS resourcesId=9, CSI-RS resourcesId=2}. It is assumed that the terminal device reports two CRIs, namely, {CRI=0, CRI=3}. In this case, the network device may indicate, by using the configuration information, that the DMRS sequence #0 is associated with a CSI-RS resource corresponding to CSI-RS resourcesId=3, and the DMRS sequence #1 is associated with a CSI-RS resource corresponding to CSI-RS resourcesId=2.

It may be understood that naming of the configuration information is merely an example, and the configuration information may be alternatively replaced with any other possible name, for example, mapping indication information. This is not limited.

S602: The network device sends the pilot signal to the terminal device. Correspondingly, the terminal device receives the pilot signal from the network device.

The pilot signal may also be referred to as a reference signal, and may be used for channel estimation or sounding. For example, the pilot signal may be a CSI-RS, an SSB, a PT-RS, a DMRS, an SRS, or the like. This is not limited. For ease of understanding, in this embodiment of this application, an example in which the pilot signal is the DMRS is used for subsequent description.

The pilot signal corresponds to the first pilot sequence. The pilot sequence includes the first pilot sequence. In other words, the network device may send the pilot signal to the terminal device by using the first pilot sequence. The first pilot sequence may be one of the at least one pilot sequence in the pilot sequence set configured by the network device. This is not limited. It may be understood that the first pilot sequence is a pilot sequence selected by the network device for the terminal device based on a scheduling beam of a PDSCH in a current slot. The implementation process is not limited in embodiments of this application. Optionally, the pilot signal may be associated with any channel, for example, a downlink control channel, a downlink data channel, an uplink control channel, an uplink data channel, or the like. This is not limited. For ease of understanding, in this embodiment of this application, an example in which the pilot signal is associated with a PDCCH is used for description. For example, the DMRS may be associated with the PDCCH. The network device may send the PDCCH to the terminal device based on the first pilot sequence. The PDCCH may further be associated with specific scheduling information of the PDSCH, for example, a modulation and coding scheme (modulation and coding scheme, MCS), a time-frequency domain resource position, or the like. This is not limited.

For example, it is assumed that the network device has two beams (transmission beams), which are respectively denoted as a beam #a and a beam #b. Correspondences between the two beams and the CSI-RS resources are as follows: A CSI-RS resource corresponding to CSI-RS resourceId=0 corresponds to the beam #a, that is, the CSI-RS resource corresponding to CSI-RS resourceId=0 is sent by using a transmission spatial domain filtering beam #a; and the CSI-RS resource corresponding to CSI-RS resourceId=1 corresponds to the beam #b, that is, the CSI-RS resource corresponding to CSI-RS resourceId=1 is sent by using a transmission spatial domain filtering beam #b. The foregoing Manner 3 is used as an example. It is assumed that the DMRS sequence #0 is associated with the CSI-RS resource corresponding to CSI-RS resourceId=0, and the DMRS sequence #1 is associated with the CSI-RS resource corresponding to CSI-RS resourceId=0.

If the network device implements PDSCH scheduling transmission in the current slot based on the beam #a, the network device may send, by using a DMRS sequence corresponding to the DMRS sequence #0, a DMRS signal of a PDCCH associated with the PDSCH scheduling information. Alternatively, if the network device implements PDSCH scheduling transmission in the current slot based on the beam #b, the network device may send, by using a DMRS sequence corresponding to the DMRS sequence #1, a DMRS signal of a PDCCH associated with the PDSCH scheduling information.

S603: The terminal device determines a first transmission beam of the downlink channel based on the configuration information and the first pilot sequence.

It may be understood that, before specifically describing a manner in which the terminal device determines the first transmission beam, an implementation process in which the terminal device determines the first pilot sequence is specifically described.

In a possible design scheme, before that the terminal device determines the first transmission beam of the downlink channel based on the configuration information and the first pilot sequence, the method may further include:
The terminal device determines the first pilot sequence by performing pilot sequence correlation detection on the pilot signal.

The terminal device may perform sequence correlation detection at a corresponding time-frequency domain resource position based on a related parameter of each pilot sequence in the pilot sequence set configured by the network device and a CORESET configuration parameter corresponding to the PDCCH channel, to determine the first pilot sequence. For example, the terminal device may determine a time-frequency domain resource position of the pilot signal based on a time-frequency domain resource position that may be occupied by the PDCCH and that is indicated by the CORESET configuration parameter, and extract a received signal at the time-frequency domain resource position. The terminal device may perform correlation (operation) between each pilot sequence in the configured pilot sequence set and the received signal extracted at the time-frequency domain resource position, determine a pilot sequence in the pilot sequence set with a largest auto-correlation peak obtained after sequence correlation is performed on the received signal, and determine the pilot sequence as the pilot sequence for sending the pilot signal, that is, the first pilot sequence.

For example, still in the example in step S602, the terminal device extracts the DMRS signal (corresponding to the DMRS sequence #1) at the corresponding time-frequency domain resource position, and separately correlates the DMRS signal with the DMRS sequence #0 and the DMRS sequence #1. When it is assumed that an auto-correlation peak value obtained after the DMRS sequence #1 is correlated with the DMRS signal is obviously higher than an auto-correlation peak value obtained after the DMRS sequence #0 is correlated with the DMRS signal, the terminal device may determine that the pilot sequence corresponding to the DMRS signal is the DMRS sequence #1.

It should be understood that, for an implementation process in which the terminal device performs sequence correlation detection on the pilot sequence, refer to the sequence correlation detection process in the conventional technology. This is not limited in embodiments of this application.

With reference to the foregoing descriptions, the following specifically describes a specific implementation process in which the terminal device determines the first transmission beam.

The terminal device may determine, based on the determined first pilot sequence and a preconfigured mapping relationship between the pilot sequence and the transmission beam, a first transmission beam corresponding to the first pilot sequence, and determine the first transmission beam as the transmission beam of the downlink channel. For example, still in the foregoing example, the terminal device may determine, based on the determined DMRS sequence #1, that the corresponding transmission beam is the beam #b, that is, the beam #b is a downlink transmission beam in the current slot.

In a possible design scheme, that the terminal device determines the first transmission beam of the downlink channel based on the configuration information and the first pilot sequence includes: The terminal device determines the first transmission beam of the downlink channel based on the configuration information and the first pilot sequence before the downlink control information DCI is demodulated.

It may be understood that the terminal device performs sequence correlation detection before the DCI is demodulated. In other words, the terminal device may obtain the beam indication information, namely, the first transmission beam, before the DCI is demodulated, to receive the downlink channel more quickly by using a matched reception beam, improving user performance and user experience.

In conclusion, the network device may preconfigure, for the terminal device, the mapping relationship between the pilot sequence and the transmission beam. The terminal device may determine, based on the mapping relationship and the first pilot sequence corresponding to the received pilot signal, the first transmission beam, corresponding to the first pilot sequence, of the downlink channel, so that the terminal device can subsequently determine the corresponding reception beam based on the first transmission beam. This allows for faster reception of the downlink channel by using the newly matched reception beam, improving a system capacity and user experience.

With reference to the foregoing embodiment, in a possible design scheme, the method may further include:
The network device sends the downlink data channel or the downlink control channel to the terminal device by using the first transmission beam of the downlink channel.

Correspondingly, the terminal device determines the first reception beam of the downlink channel based on the first transmission beam, and the terminal device receives the downlink data channel or the downlink control channel by using the first reception beam. The transmission beam includes the first transmission beam.

It may be understood that the terminal device may determine a proper first reception beam based on the first transmission beam determined in step S603, and receive the downlink data channel or the downlink control channel from the network device by using the first reception beam. For example, the terminal device may determine, based on a spatial domain reception beam of the first transmission beam, the spatial domain reception beam as the first reception beam. Alternatively, the terminal device may determine, in another manner, the first reception beam corresponding to the first transmission beam. This is not limited. For example, still in the foregoing example, a reception beam corresponding to the beam #b is a beam #b1, and the terminal device may receive data of the downlink data channel or control information of the downlink control channel by using the beam #b1.

In a possible design scheme, that the terminal device receives the downlink data channel or the downlink control channel by using the first reception beam includes:
The terminal device receives the downlink data channel or the downlink control channel, by using the first reception beam, on a symbol after an interval greater than or equal to X symbols from the last symbol carrying the pilot signal.

The X symbols are time required for the terminal device to perform the pilot sequence correlation detection and/or beam switching, where X is an integer greater than or equal to 0. The time required for beam switching may be time required for the terminal device to switch from one reception beam to another reception beam.

The following uses the following two scenarios as an example for specific description.

Scenario 1: When X is equal to 0, the terminal device may implement zero-delay beam switching.

For example, if the time required for the terminal device to perform the pilot sequence correlation detection and/or the beam switching is short, the X symbols may be ignored, and zero-delay beam switching between the downlink control channel (for example, the PDCCH associated with the first pilot sequence and the DCI) and the downlink data channel (for example, the PDSCH) may be implemented. In other words, on a symbol adjacent to the PDCCH, the terminal device may select, based on the first transmission beam, a matched first reception beam to receive the data of the downlink data channel or control information transmitted on a subsequent downlink control channel.

For example, it is assumed that in a slot T1, the network device sends PDSCH data to UE #a by using the beam #a. According to a real-time scheduling requirement, as shown in FIG. 7, the network device needs to send the PDSCH data to the UE #a in a slot T2 by using the beam #b (namely, the first transmission beam). It is assumed that a reception beam corresponding to the beam #a is a beam #a1, and the slot T1 is shorter than the slot T2. In this case, in the slot T2, the terminal device may receive the PDSCH data on the symbol adjacent to the PDCCH by using the beam #b1 (namely, the first reception beam) corresponding to the beam #b.

Scenario 2: When X is an integer greater than 0, the terminal device needs to wait for specific duration, denoted as timeDuration1#1, and timeDuration1#1 is equal to the X symbols.

For example, if the time required for the terminal device to perform the pilot sequence correlation detection and/or the beam switching is long, zero-delay beam switching between the downlink control channel and the downlink data channel cannot be implemented. In this case, the terminal device may report a time requirement timeDuration#1 that considers a sequence detection and beam switching processing delay. On a symbol with an interval greater than or equal to timeDuration#1 apart from the last symbol of the PDCCH, the terminal device may select, based on the first transmission beam, a matched first reception beam to receive the data of the downlink data channel or control information transmitted on a subsequent downlink control channel.

It may be understood that timeDuration#1 is shorter than specific timeDuration required for the terminal device to blindly detect the DCI. In other words, timeDuration#1 is shorter than timeDuration. For a beam used on a symbol with an interval shorter than timeDuration#1 apart from the last symbol of the PDCCH, an agreement in an existing protocol is reused. This is not limited. For example, on the symbol with the interval shorter than timeDuration#1 apart from the last symbol of the PDCCH, the terminal device may continue to receive the data of the downlink data channel or the control information transmitted on the subsequent downlink control channel by using a reception beam used in a slot previous to the current slot.

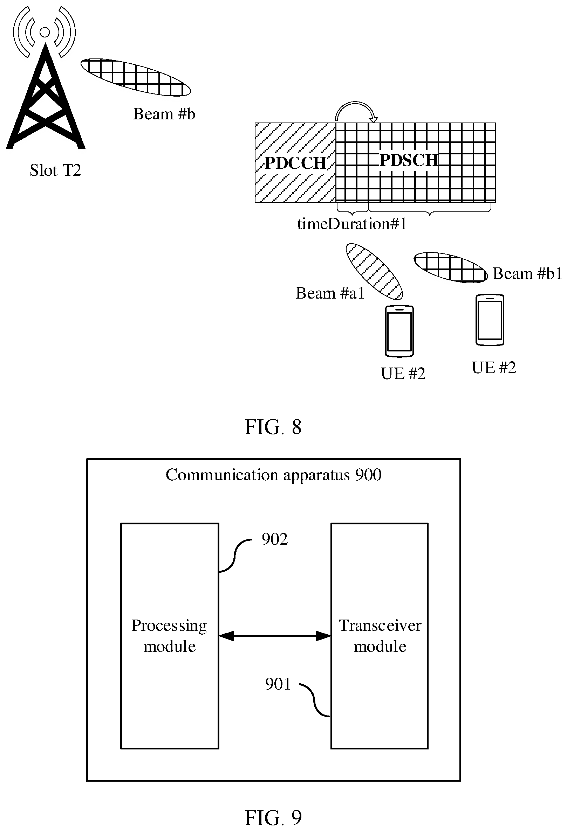

For example, it is assumed that in a slot T1, the network device sends PDSCH data to UE #a by using the beam #a. According to a real-time scheduling requirement, as shown in FIG. 8, the network device needs to send the PDSCH data to the UE #a in a slot T2 by using the beam #b (namely, the first transmission beam). It is assumed that a reception beam corresponding to the beam #a is a beam #a1, and the slot T1 is shorter than the slot T2. On a symbol corresponding to timeDuration#1 in the slot T2, the terminal device may receive the PDSCH data by using the beam #a1 corresponding to the slot T1. On a symbol corresponding to a time period after timeDuration#1 in the slot T2, the terminal device may receive the PDSCH data by using the beam #b1 (namely, the first reception beam) corresponding to the beam #b.

It may be understood that the foregoing embodiments are described by using the downlink transmission scenario as an example. To be specific, before the terminal device completes DCI demodulation, the terminal device may determine, based on the configured mapping relationship between the pilot sequence and the transmission beam, the (downlink) transmission beam used by the network device in the current slot, and select, based on the transmission beam, the proper (downlink) reception beam to receive data or information of the downlink channel. It may be understood that, in an uplink transmission scenario, the network device determines a (uplink) transmission beam used by the terminal device in the current slot, and selects, based on the transmission beam, a proper (downlink) reception beam to receive data or information of an uplink channel. An implementation principle of the uplink transmission scenario is similar to the implementation principle of the downlink transmission scenario, which may be referred to for understanding. Details are not described again.

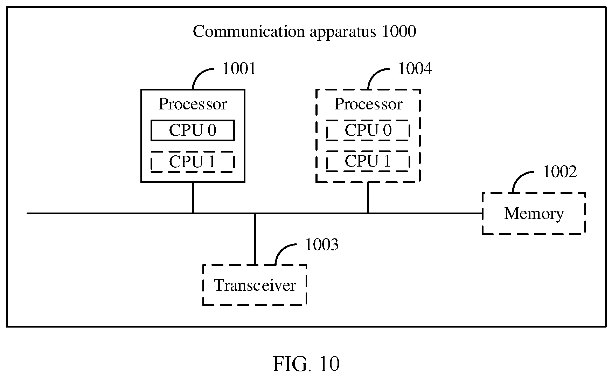

The foregoing describes in detail the communication methods provided in embodiments of this application with reference to FIG. 6 to FIG. 8. The following describes in detail a communication apparatus configured to perform the communication method provided in embodiments of this application with reference to FIG. 9 and FIG. 10.

FIG. 9 is a diagram 1 of a structure of a communication apparatus according to an embodiment of this application. For example, as shown in FIG. 9, the communication apparatus 900 includes a transceiver module 901 and a processing module 902. For ease of description, FIG. 9 shows only main components of the communication apparatus 900.

In some embodiments, the communication apparatus 900 is applicable to the communication system shown in FIG. 4, and performs functions of the terminal device.

The transceiver module 901 may be configured to perform a function of the terminal device for receiving and sending a message, and the processing module 902 may perform a function of the terminal device other than receiving and sending the message. For example, the transceiver module 901 is configured to: receive configuration information from a network device, and receive a pilot signal from the network device. The processing module 902 is configured to determine a first transmission beam of a downlink channel based on the configuration information and a first pilot sequence. The configuration information indicates a mapping relationship between a pilot sequence and a transmission beam, the pilot signal corresponds to the first pilot sequence, and the pilot sequence includes the first pilot sequence.

Optionally, the transceiver module 901 may include a sending module (not shown in FIG. 9) and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9), and the storage module stores a program or instructions. When the processing module 902 executes the program or the instructions, the communication apparatus 900 may be caused to perform the communication method.

It should be noted that the communication apparatus 900 may be a terminal device, may be a chip (system) or another part or component in the terminal device, or may be an apparatus including the terminal device. This is not limited in embodiments of this application.

In addition, for technical effects of the communication apparatus 900, refer to the technical effects of the communication method shown in FIG. 6. Details are not described herein again.

In some embodiments, the communication apparatus 900 is applicable to the communication system shown in FIG. 4, and performs functions of the network device.

The transceiver module 901 may be configured to perform a function of the network device for receiving and sending a message, and the processing module 902 may perform a function of the network device other than receiving and sending the message. For example, the transceiver module 901 is configured to: send configuration information to a terminal device, and send a pilot signal to the terminal device. The configuration information indicates a mapping relationship between a pilot sequence and a transmission beam, the pilot signal corresponds to a first pilot sequence, and the pilot sequence includes the first pilot sequence.

In a possible design scheme, the processing module 902 is configured to send a downlink data channel or a downlink control channel to the terminal device by using a first transmission beam of a downlink channel. The transmission beam includes the first transmission beam. Optionally, the transceiver module 901 may include a sending module and a receiving module. The sending module is configured to implement a sending function of the communication apparatus 900, and the receiving module is configured to implement a receiving function of the communication apparatus 900.

Optionally, the communication apparatus 900 may further include a storage module, and the storage module stores a program or instructions. When the processing module 902 executes the program or the instructions, the communication apparatus 900 may be caused to perform the communication method.

It should be noted that the communication apparatus 900 may be a network device, may be a chip (system) or another part or component in the network device, or may be an apparatus including the network device. This is not limited in embodiments of this application.

In addition, for technical effects of the communication apparatus 900, refer to the technical effects of the communication method. Details are not described herein again.

For example, FIG. 10 is a diagram 2 of a structure of a communication apparatus according to an embodiment of this application. The communication apparatus may be a terminal device or a network device, or may be a chip (system) or another part or component in the terminal device or the network device. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and the transceiver 1003, for example, may be connected through a communication bus.

The following specifically describes parts of the communication apparatus 1000 with reference to FIG. 10.

The processor 1001 is a control center of the communication apparatus 1000, and may be a processor, or may be a generic term of a plurality of processing elements. For example, the processor 1001 is one or more central processing units (central processing units, CPUs), or may be an application-specific integrated circuit (application-specific integrated circuit, ASIC), or is configured as one or more integrated circuits that implement embodiments of this application, for example, one or more microprocessors (digital signal processors, DSPs), or one or more field programmable gate arrays (field programmable gate arrays, FPGAs).

Optionally, the processor 1001 may perform various functions of the communication apparatus 1000 by running or executing a software program stored in the memory 1002 and invoking data stored in the memory 1002, for example, perform the communication method shown in FIG. 6.

During specific implementation, in an embodiment, the processor 1001 may include one or more CPUs, for example, a CPU 0 and a CPU 1 shown in FIG. 10.

During specific implementation, in an embodiment, the communication apparatus 1000 may alternatively include a plurality of processors, for example, the processor 1001 and a processor 1004 shown in FIG. 10. Each of the processors may be a single-core processor (single-CPU), or may be a multi-core processor (multi-CPU). The processor herein may be one or more devices, circuits, and/or processing cores configured to process data (for example, computer program instructions).

The memory 1002 is configured to store a software program for executing the solutions in this application, and the processor 1001 controls execution of the software program. For specific implementation, refer to the foregoing method embodiments. Details are not described herein again.

Optionally, the memory 1002 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including a compressed optical disc, a laser disc, an optical disc, a digital versatile optical disc, and a Blu-ray disc), magnetic disk storage media, or another magnetic storage device, or any another medium that can be used to carry or store desired program code in the form of instructions or data structure and that can be accessed by a computer, but not limited thereto. The memory 1002 may be integrated with the processor 1001, or may exist independently and is coupled to the processor 1001 through an interface circuit (not shown in FIG. 10) of the communication apparatus 1000. This is not specifically limited in embodiments of this application.

The transceiver 1003 is configured to communicate with another communication apparatus. For example, the communication apparatus 1000 is a terminal device, and the transceiver 1003 may be configured to communicate with a network device or another terminal device. For another example, the communication apparatus 1000 is a network device, and the transceiver 1003 may be configured to communicate with a terminal device or another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently and is coupled to the processor 1001 through the interface circuit (not shown in FIG. 10) of the communication apparatus 1000. This is not specifically limited in embodiments of this application.

It should be noted that the structure of the communication apparatus 1000 shown in FIG. 10 does not constitute a limitation on the communication apparatus. An actual communication apparatus may include more or fewer components than those shown in the figure, or combine some components, or have different component arrangements.

In addition, for technical effects of the communication apparatus 1000, refer to the technical effects of the communication method in the foregoing method embodiments. Details are not described herein again.

An embodiment of this application provides a communication system. The communication system may include the terminal device and the network device in the foregoing method embodiments.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, all or some of the foregoing embodiments may be implemented in a form of computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely illustrative. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, the part contributing to the conventional technology, or a part of the technical solutions may be implemented in a form of software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving configuration information from a network device, wherein the configuration information indicates a mapping relationship between a pilot sequence and a transmission beam;
receiving a pilot signal from the network device, wherein the pilot signal corresponds to a first pilot sequence, and the pilot sequence comprises the first pilot sequence; and
determining a first transmission beam of a downlink channel based on the configuration information and the first pilot sequence.

2. The method according to claim 1, wherein the mapping relationship comprises: a mapping relationship between the pilot sequence and a transmission configuration indicator TCI, or a mapping relationship between the pilot sequence and a pilot resource.

3. The method according to claim 2, wherein the pilot sequence is represented by different scrambling identifiers, or is represented by different parameter values of a sequence expression.

4. The method according to claim 2 or 3, wherein the pilot resource is a pilot resource configured by the network device for a terminal device, or a pilot resource corresponding to a pilot resource indicator reported by the terminal device.

5. The method according to any one of claims 2 to 4, wherein before determining the first transmission beam of the downlink channel based on the configuration information and the first pilot sequence, the method further comprises:
determining the first pilot sequence by performing pilot sequence correlation detection on the pilot signal.

6. The method according to any one of claims 2 to 5, wherein determining the first transmission beam of the downlink channel based on the configuration information and the first pilot sequence comprises:
determining the first transmission beam of the downlink channel based on the configuration information and the first pilot sequence before downlink control information DCI is demodulated.

7. The method according to any one of claims 2 to 6, wherein the method further comprises:
determining a first reception beam of the downlink channel based on the first transmission beam; and
receiving a downlink data channel or a downlink control channel from the network device by using the first reception beam.

8. The method according to claim 7, wherein receiving the downlink data channel or the downlink control channel by using the first reception beam comprises:
receiving the downlink data channel or the downlink control channel, by using the first reception beam, on a symbol after an interval greater than or equal to X symbols from the last symbol carrying the pilot signal, wherein X is an integer greater than or equal to 0.

9. The method according to claim 8, wherein the X symbols are time required for performing the pilot sequence correlation detection and/or for performing beam switching.

10. The method according to any one of claims 2 to 9, wherein the pilot resource comprises at least one of the following: a channel state information-reference signal CSI-RS resource, a synchronization information block SSB resource, a tracking reference signal TRS resource, a phase noise tracking reference signal PT-RS resource, a demodulation reference signal DMRS resource, or a sounding reference signal SRS resource.

11. The method according to any one of claims 1 to 10, wherein the configuration information is carried in at least one of the following: RRC signaling, media access control-control element MAC-CE signaling, or DCI.

12. A communication method, comprising:
sending, by a network device, configuration information to a terminal device, wherein the configuration information indicates a mapping relationship between a pilot sequence and a transmission beam; and
sending, by the network device, a pilot signal to the terminal device, wherein the pilot signal corresponds to a first pilot sequence, and the pilot sequence comprises the first pilot sequence.

13. The method according to claim 12, wherein the mapping relationship comprises: a mapping relationship between the pilot sequence and a transmission configuration indicator TCI, or a mapping relationship between the pilot sequence and a pilot resource.

14. The method according to claim 13, wherein the pilot sequence is represented by different scrambling identifiers, or is represented by different parameter values of a sequence expression.

15. The method according to claim 13 or 14, wherein the pilot resource is a pilot resource configured by the network device for the terminal device, or a pilot resource corresponding to a pilot resource indicator reported by the terminal device.

16. The method according to any one of claims 12 to 15, wherein the method further comprises:
sending, by the network device, a downlink data channel or a downlink control channel to the terminal device by using a first transmission beam of a downlink channel, wherein the transmission beam comprises the first transmission beam.

17. The method according to any one of claims 13 to 16, wherein the pilot resource comprises at least one of the following: a channel state information-reference signal CSI-RS resource, a synchronization information block SSB resource, a tracking reference signal TRS resource, a phase noise tracking reference signal PT-RS resource, a demodulation reference signal DMRS resource, or a sounding reference signal SRS resource.

18. The method according to any one of claims 12 to 17, wherein the configuration information is carried in at least one of the following: RRC signaling, media access control-control element MAC-CE signaling, or downlink control information DCI.

19. A communication apparatus, wherein the communication apparatus comprises a processor; and
the processor is configured to perform the communication method according to any one of claims 1 to 18.

20. A communication apparatus, wherein the communication apparatus comprises a processor and a memory, the memory is configured to store computer instructions, and when the processor executes the instructions, the communication apparatus is caused to perform the communication method according to any one of claims 1 to 18.

21. A computer-readable storage medium, wherein the computer-readable storage medium comprises a computer program or instructions, and when the computer program or the instructions are run on a computer, the computer is caused to perform the communication method according to any one of claims 1 to 18.

22. A computer program product, wherein the computer program product comprises a computer program or instructions, and when the computer program or the instructions are run on a computer, the computer is caused to perform the communication method according to any one of claims 1 to 18.

23. A communication apparatus, comprising a module configured to perform the communication method according to any one of claims 1 to 18.
